# EUROPÄISCHE PATENTSCHRIFT

(11) **EP 2 655 113 B1**
(45) Veröffentlichungstag und Bekanntmachung des Hinweises auf die Patenterteilung: **25.10.2017**
(21) Anmeldenummer: 11831796.5
(22) Anmeldetag: 29.11.2011
(51) Int. Cl.: B60K 6/40, B60K 6/405

(54) **HYBRIDMODUL FÜR EINEN TRIEBSTRANG EINES FAHRZEUGES**
HYBRID MODULE FOR A DRIVE TRAIN OF A VEHICLE
MODULE HYBRIDE POUR UN GROUPE MOTOPROPULSEUR D'UN VÉHICULE

(30) Priorität: 21.12.2010 DE 102010055275
(43) Veröffentlichungstag der Anmeldung: 30.10.2013
(60) Teilanmeldung: 16187598.4
(73) Patentinhaber: Schaeffler Technologies AG & Co. KG, 91074 Herzogenaurach (DE)
(72) Erfinder: REITZ, Dirk, 76534 Baden-Baden (DE); RUDER, Willi, 77933 Lahr (DE); SCHNEIDER, Matthias, 77880 Sasbach (DE)
(86) Internationale Anmeldenummer: PCT/DE2011/002047
(87) Internationale Veröffentlichungsnummer: WO 2012/083912

(56) Entgegenhaltungen:
- EP-A1- 2 050 608
- JP-A- 2008 126 703
- US-A1- 2009 166 109
- US-A1- 2010 087 290
- US-A1- 2010 314 185

## Beschreibung

Die vorliegende Erfindung betrifft ein Hybridmodul für einen Antriebsstrang eines Fahrzeuges mit Verbrennungsmotor und Getriebe gemäß dem Oberbegriff des Anspruchs 1.

Aus der DE 100 36 504 A1 ist ein Hybridantriebsstrang eines Kraftfahrzeuges bekannt, welcher einen Verbrennungsmotor, ein Zweimassenschwungrad, einen elektrischen Antrieb und ein Getriebe umfasst, wobei eine erste Trennkupplung zwischen Verbrennungsmotor und elektrischen Antrieb und eine weitere Trennkupplung zwischen elektrischem Antrieb und Getriebe angeordnet sind. Die motorseitig angeordnete erste Trennkupplung dient dazu, den Verbrennungsmotor vom restlichen Antriebsstrang abzukoppeln, um z. B. mit dem Fahrzeug rein elektrisch zu fahren. Die getriebeseitig angeordnete zweite Trennkupplung dient dazu, den Verbrennungsmotor über den elektrischen Antrieb zu starten und während dieses Startvorganges das Getriebe abzukoppeln. Der elektrische Antrieb und die beiden Trennkupplungen können aus Bauraumgründen axial und radial überlagert werden, wie in Figur 2 der DE 100 36 504 A1 gezeigt, indem die erste Trennkupplung in den Rotor des elektrischen Antriebes integriert wird. Diese aus bauraumtechnischen Gründen zumeist notwendige Integration der motorseitig angeordneten Trennkupplung in den Rotor der Elektromaschine führt jedoch zu vergleichsweise geringen Reibradien. Aufgrund dieser geringeren Reibradien sinkt aber das übertragbare Moment ab.

Aus der JP 2008 126703 A ist ein Hybridmodul gemäß dem Oberbegriff des Anspruchs 1 bekannt.

Es ist daher eine Aufgabe der vorliegenden Erfindung, das durch das Hybridmodul der Eingangs genannten Art übertragbare Moment zu erhöhen bei im Wesentlichen gleichbleibendem Bauraumbedarf.

Diese Aufgabe wird mit den in Anspruch 1 angegebenen Maßnahmen gelöst.

Ein Hybridmodul für einen Triebstrang eines Fahrzeuges mit Verbrennungsmotor und Getriebe ist zwischen Verbrennungsmotor und Getriebe wirksam und weist einen elektrischen Antrieb, eine Trennkupplung und einen Freilauf auf, wobei die Trennkupplung und der Freilauf parallel zueinander jeweils zur Drehmomentübertragung von Verbrennungsmotor in Richtung Getriebe vorgesehen sind, der Freilauf vom Verbrennungsmotor kommendes Drehmoment in Richtung Getriebe überträgt und bei entgegengesetzt gerichtetem Drehmoment öffnet, und ein vom Freilauf übertragener Anteil am vom Verbrennungsmotor erzeugten Drehmoment durch Einstellung eines von der Trennkupplung übertragbaren Drehmomentes einstellbar ist, so dass das Fahrzeug wahlweise durch den Verbrennungsmotor oder den elektrischen Antrieb oder kombiniert gleichzeitig durch beide antreibbar ist.

Es wird also die Funktion der aus dem Stand der Technik bekannten motorseitigen Trennkupplung auf zwei im Drehmomentenfluss parallel zueinander angeordnete Bauteile, nämlich eine Trennkupplung und einen Freilauf aufgeteilt. Bei offener Trennkupplung wird das gesamte vom Verbrennungsmotor erzeugte Drehmoment über den Freilauf an das Getriebe übermittelt. Der Freilauf sollte dementsprechend so ausgelegt werden, dass dessen übertragbares Drehmoment dem vom Verbrennungsmotor erzeugbaren Drehmoment entspricht. Die Drehmomentenübertragungskapazität der Trennkupplung kann demgegenüber deutlich niedriger als das vom Verbrennungsmotor erzeugbare Drehmoment gewählt werden. Beispielsweise kann bei einem vom Verbrennungsmotor erzeugbaren Drehmoment von 700 bis 800 Nm die Trennkupplung auf 100 Nm bis 130 Nm ausgelegt werden, wohingegen der Freilauf auch auf 700 Nm bis 800 Nm ausgelegt sein sollte. Wird die Trennkupplung teilweise geschlossen, so wird entsprechend dem von der Trennkupplung übertragbaren Drehmoment das durch den Freilauf übertragene Drehmoment verringert. Mit anderen Worten teilt sich das vom Verbrennungsmotor insgesamt erzeugte Drehmoment auf den Freilauf und auf die Trennkupplung auf, entsprechend dem von der Trennkupplung übertragenen Drehmoment (was wiederum von einer Betätigungskraft der Trennkupplung abhängt).

Dabei kann die Trennkupplung im verbrennungsmotorischen Betrieb des vorliegenden Triebstranges geschlossen bleiben bzw. geschlossen gehalten werden, so dass als Regelfall eine Drehmomentenaufteilung auf Kupplung und Freilauf erfolgt. Unter Umständen kann es hierbei allerdings vorteilhaft sein, im verbrennungsmotorischen Betrieb die Kupplung zumindest zum Teil zu öffnen bzw. geöffnet zu halten, z.B. bei Zug-Hoch-Schaltungen oder bei Schub-Hoch-Schaltungen.

Mit der Trennkupplung kann Drehmoment in Richtung Verbrennungsmotor übertragen werden (der Freilauf öffnet in dieser Übertragungsrichtung des Drehmomentes). Dementsprechend sind bei geschlossener Trennkupplung ein Anschleppen des Verbrennungsmotors aus dem elektrischen Fahren (beispielsweise bei 80 bis 130 Nm) sowie ein Übertragen eines Schubmomentes im Falle einer Batterie mit vollem Ladezustand (beispielsweise bis zum 90 Nm) realisierbar.

Das Hybridmodul umfasst daher wie vorstehend beschrieben parallel zueinander geschaltet Trennkupplung und Freilauf, wobei das Drehmoment des Verbrenners in Richtung Triebstrang ausschließlich vom Freilauf, oder von Freilauf und Trennkupplung gemeinsam, oder ggf. ausschließlich über die Trennkupplung übertragen werden kann. Zudem werden vom Triebstrang in Richtung Verbrennungsmotor gerichtete Drehmomente ausschließlich über die Trennkupplung übertragen.

Vorteilhafterweise ist die Trennkupplung als "normally open" Kupplung ausgebildet, also im Grundzustand offen ausgebildet, und wird über eine Schließkraft zugezogen bzw. zugedrückt. Dies ist insoweit vorteilhaft, als die Kupplung im vorliegenden Triebstrang bei üblicher Betriebsweise eines mit einem solchen Hybridmodul ausgestatteten Fahrzeuges zu 70% offen ist. Der Wirkungsgrad des Aktors ist dementsprechend unter solchen Randbedingungen bei einer "normally open" Kupplung günstiger als bei einer "normally closed" Kupplung.

Die im Betrieb der Verbrennungskraftmaschine anfallenden Wechselmomente können über eine Dämpfungseinrichtung, wie ein Zweimassenschwungrad, welches zwischen Verbrennungsmotor und Hybridmodul angeordnet ist, abgefangen werden.

Weitere bevorzugte Ausgestaltungen der vorliegenden Erfindung sind Gegenstand der abhängigen Ansprüche.

Die vorliegende Erfindung wird nachfolgend anhand bevorzugter Ausführungsbeispiele in Verbindung mit den zugehörigen Figuren näher erläutert. In diesen zeigen:
- Fig. 1: eine schematische Darstellung eines Triebstranges eines Fahrzeuges mit dem vorliegenden Hybridmodul,
- Fig. 2: ein Ausführungsbeispiel des vorliegenden Hybridmoduls, bei welchem der Freilauf axial neben der Zentrallagerung angeordnet ist und bei welchem ein Innenring des Freilaufes gleichzeitig die Anbindung zur Kupplungsscheibe sowie zum Zweimassenschwungrad übernimmt, und bei welchem ein äußerer Käfig des Freilaufes mit dem Getriebeeingang verbunden ist,
- Fig. 3: ein weiteres Ausführungsbeispiel des vorliegenden Hybridmoduls, bei welchem die Anbindung von Innen- und Außenring am Freilauf vertauscht ist im Vergleich zum Ausführungsbeispiel nach Figur 2,
- Fig. 4: ein Ausführungsbeispiel des Hybridmoduls, bei welchem das Zentrallager und der Freilauf zu einer axialen Baueinheit zusammengefasst sind,
- Fig. 5: ein weiteres Ausführungsbeispiel des Hybridmoduls mit einer ersten Art der radialen Schachtelung von Zentrallager und Freilauf, bei welchem das Zentrallager und der Freilauf zu einer radialen Baueinheit zusammengefasst sind,
- Fig. 6: ein weiteres Ausführungsbeispiel des Hybridmoduls mit einer weiteren Art der radialen Schachtelung von Freilauf und Zentrallager,
- Fig. 7: ein weiteres Ausführungsbeispiel des Hybridmoduls mit einer weiteren Art der radialen Schachtelung und Zusammenfassung von Freilauf und Zentrallager,
- Fig. 8: ein weiteres Ausführungsbeispiel des Hybridmoduls, gezeigt zwischen Kurbelwelle und Anschlussteil zu einer weiteren getriebeseitig angeordneten Kupplungseinrichtung, welches auf dem in Figur 6 schematischen gezeigten Ausführungsbeispiel beruht und
- Fig. 9: mehrere Ausführungsbeispiele einer Lagerungs- und Freilaufbaugruppe für das Hybridmodul.

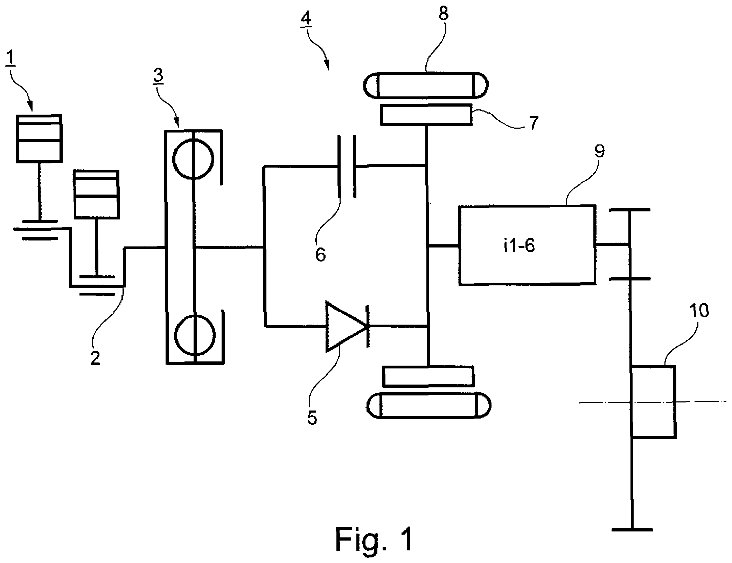

Figur 1 zeigt schematisch einen Triebstrang eines Fahrzeuges mit einem Verbrennungsmotor 1, einem an einer Kurbelwelle 2 des Verbrennungsmotors 1 angebundenem Schwingungsdämpfer (vorliegend einem Zweimassenschwungrad), einem Hybridmodul 4 mit Freilauf 5 und Trennkupplung 6, sowie mit Rotor 7 und Stator 8 eines elektrischen Antriebes, einem Getriebe 9, einem Differenzial 10 und nicht im Einzelnen gezeigten angetriebenen Rädern.

Figur 1 ist dabei nur exemplarisch zu verstehen. So umfasst der Verbrennungsmotor 1 gemäß Darstellung Figur 1 "nur" zwei Zylinder. Die vorliegende Erfindung ist aber nicht auf eine solche konkrete Anzahl an Zylindern beschränkt. Vielmehr wären auch mehr als zwei Zylinder für den Verbrennungsmotor 1 oder auch eine Parallel- und Reihenschaltung mehrerer Verbrennungsmotoren denkbar. Zudem zeigt Figur 1 ein Zweimassenschwungrad. Alternativ hierzu könnte auch ein Einmassenschwungrad oder eine andere Art der Schwingungsdämpfung, wie ein Massen- oder Fliehkraftpendel oder eine Kombination aus solchen Dämpfungselementen verwendet werden, Abhängig von der Laufruhe des oder der Verbrennungsmotoren könnte ggf. auch auf eine solche Dämpfungseinheit verzichtet werden. In Fig. 1 ist zudem als Getriebe ein (automatisiertes) Sechs-Stufen-Schaltgetriebe gezeigt, ohne dass die vorliegende Erfindung hierauf beschränkt wäre. Vielmehr ist die Ausbildung des Getriebes als Automatgetriebe/ Stufengetriebe/ CVT-Getriebe oder andere Arten von Getriebe wie Schubkurbelgetriebe ggf. auch in Verbindung mit einer weiteren Trenneinheit zwischen Getriebe und elektrischem Antrieb 7, 8 (wie einem Drehmomentenwandler, einer weiteren Trennkupplung oder ähnlichen Baugruppen) denkbar.

Fig. 1 ist zum vorliegenden Hybridmodul insbesondere entnehmbar, dass zwischen Verbrennungsmotor 1 und Getriebe 9 zwei parallele Drehmomentübertragungsstränge vorgesehen sind, einem ersten mit der Trennkupplung 6 und einem zweiten mit dem Freilauf 5, so dass die Funktionen der aus dem Stand der Technik bekannten motorseitigen Trennkupplung auf zwei voneinander verschiedene Bauteile aufgeteilt sind. So wird das von der Brennkraftmaschine 1 erzeugte Moment abhängig von einer an der Kupplung anliegenden Betätigungskraft auf Trennkupplung und Freilauf aufgeteilt.

Der Freilauf überträgt wie Figur 1 entnehmbar bei Drehmomentübertragung vom Verbrennungsmotor 1 auf das Getriebe 9 und öffnet bei Drehmomentenflussrichtung von Getriebe 9 auf Verbrennungsmotor 1. Drehmomente vom Getriebe 9 in Richtung Verbrennungsmotor 1 sind bei geschlossener Kupplung übertragbar. Dies betrifft insbesondere das Anschleppen des Verbrenners aus dem elektrischen Fahren sowie das Übertragen des Schubmomentes im Falle einer vollen Batterie.

Im verbrennungsmotorischen Betrieb des Triebstanges bleibt die Trennkupplung 6 aber im Regelfall geschlossen, so dass diese entsprechend ihrer anliegenden Drehmomentenübertragungskapazität das vom Verbrennungsmotor 1 übertragbare Moment jedenfalls anteilig zusammen mit dem Freilauf überträgt.

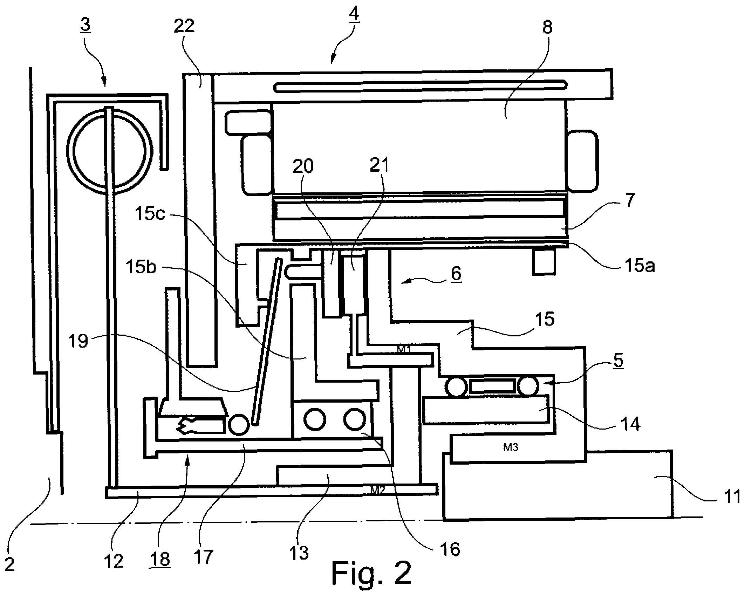

Eine erste konstruktive Ausgestaltung des in Figur 1 gezeigten Schemas ist Figur 2 entnehmbar, welches das Hybridmodul 4 zwischen dem Zweimassenschwungrad ("ZMS") 3 und einer Getriebeeingangswelle 11 des Getriebes 9 als Halbschnitt zeigt, wobei eine Ausgangsseite 12 des ZMS 3 mit einem Zentralbauteil 13, vorliegend über eine axiale Steckverzahnung M2, verbunden ist. Das gesamte vom Verbrennungsmotor 1 erzeugte Drehmoment wird dementsprechend unter Vermittlung des ZMS 3 und Zwischenwelle 12 an das Zentralbauteil 13 des Hybridmoduls übertragen. Das Zentralbauteil 13 ist mit einem Innenring 14 des Freilaufes 5 verbunden bzw. ein Teil des Zentralbauteils 13 (beispielsweise ein hülsenartiger Fortsatz) ist unmittelbar als Innenring 14 des Freilaufes ausgestaltet. Ein Außenring des Freilaufes 5 ist mit einem Kupplungsgehäuse 15 der Trennkupplung 4 verbunden bzw. ein Teil des Kupplungsgehäuse 15 ist unmittelbar als Außenring bzw. als äußerer Käfig des Laufringes ausbildet. Das Kupplungsgehäuse 15 ist, vorzugsweise über eine weitere axiale Steckverzahnung M3, mit einer Getriebeeingangswelle 11 des Getriebes 9 verbunden, wobei zwischen Kupplungsgehäuse und Getriebeeingangswelle eine weitere Trennkupplung (beispielsweise ein Wandler oder eine weitere Reibkupplung) angeordnet sein kann.

Das Kupplungsgehäuse 15 umfasst weiterhin einen zylindrischen Teil 15a, welcher zugleich Teil des Rotors 7 des elektrischen Antriebs 7, 8 ist. So sind vorliegend die Permanentmagnete des Rotors unmittelbar am zylindrischen Teil 15a des Kupplungsgehäuses befestigt.

Das Kupplungsgehäuse 15 umfasst weiterhin einen radial erstreckten Bereich 15b, welcher an einem radial äußeren Bereich mit dem zylindrischen Teil 15a verbunden ist, und welcher in einem radial inneren Bereich einen hülsenartigen Abschnitt aufweist, der auf einem Zentrallager 16 abgestützt ist.

Das Zentrallager 16 wiederum ist an einem Gehäuse 17 der Betätigungseinrichtung 18 der Trennkupplung 6 bzw. an einem hülsenartigen Bauteil 17, auf dem die Betätigungseinrichtung abstützbar ist, angeordnet.

Die Betätigungseinrichtung 18 umfasst vorliegend eine hydraulische Betätigungseinheit mit einem zur Zwischenwelle 12 konzentrisch angeordneten hydraulischen Zylinder, welcher eine Hebelfeder 19 betätigt, die an einem weiteren radial erstreckten Bereich 15c des Kupplungsgehäuses 15 der Trennkupplung 6 abgestützt ist und welche eine Anpressplatte 20 in axialer Richtung mit einer Betätigungskraft beaufschlagen kann entsprechend der Stellung des Betätigungszylinders.

Entsprechend einer axialen Verlagerung der Anpressplatte 20 wird eine Kupplungsscheibe 21 zwischen Anpressplatte 20 und Kupplungsgehäuse der Trennkupplung 6 geklemmt, wodurch die Trennkupplung 6 geschlossen werden kann.

Die Kupplungsscheibe 21 der Trennkupplung 6 ist über die axiale Steckverzahnung M1 mit dem Zentralbauteil 13 drehfest verbunden.

Die Betätigungseinheit 18 ist am Getriebegehäuse 22 befestigt.

Wie in Figur 2 gezeigt, kann das Zentrallager 16 (das vorliegend als Festlager ausgebildet ist) im Wesentlichen axial neben (also auf einem vergleichbaren Durchmesser) zum Freilauf 5 angeordnet werden, wobei ein Innenring des Freilaufes die Anbindung zur Kupplungsscheibe sowie zum Zweimassenschwungrad (über das Zentralbauteil 13) übernimmt und wobei ein äußerer Käfig des Freilaufes 5 über das Kupplungsgehäuse 15 mit dem Getriebeeingang verbunden ist.

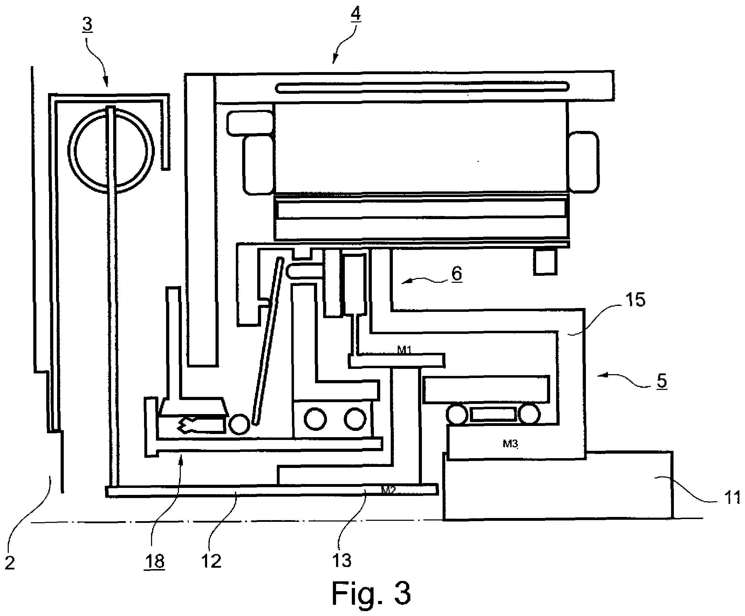

In Figur 3 ist ein weiteres Ausführungsbeispiel des Hybridmoduls gezeigt, das sich vom Ausführungsbeispiel nach Figur 2 nur im Hinblick auf die Anordnung des Freilaufes und die hierfür notwendige Ausbildung von Kupplungsgehäuse 15 und Zentralbauteil 13 unterscheidet. Die übrigen Merkmale sind identisch zum vorstehend beschriebenen Ausführungsbeispiel nach Fig. 2. So ist bei dem Ausführungsbeispiel nach Figur 3 die Anbindung von Innen- und Außenring am Freilauf vertauscht, wobei zudem der Außenring des Freilaufes 5 Bestandteil des Zentralbauteils 13 und der Innenring des Freilaufs 5 Bestandteil des Kupplungsgehäuses 15 sind.

Eine Auswahl der Anordnung nach Figur 2 oder nach Figur 3 kann abhängig von einer Schleppmomentenoptimierung sowie abhängig von einer Blockierfunktion bei hohen Drehzahlen gewählt werden.

Den Ausführungsbeispielen nach Figur 2 und 3 ist gemeinsam, dass Freilauf 5 und Zentrallager 16 im Wesentlichen auf einem vergleichbaren Durchmesser angeordnet sind. Werden zudem die axialen Positionen von Freilauf 5 und Zentrallager 16 einander angenähert, so können diese beiden Bauelementen auch zu einer Baueinheit zusammengefasst werden.

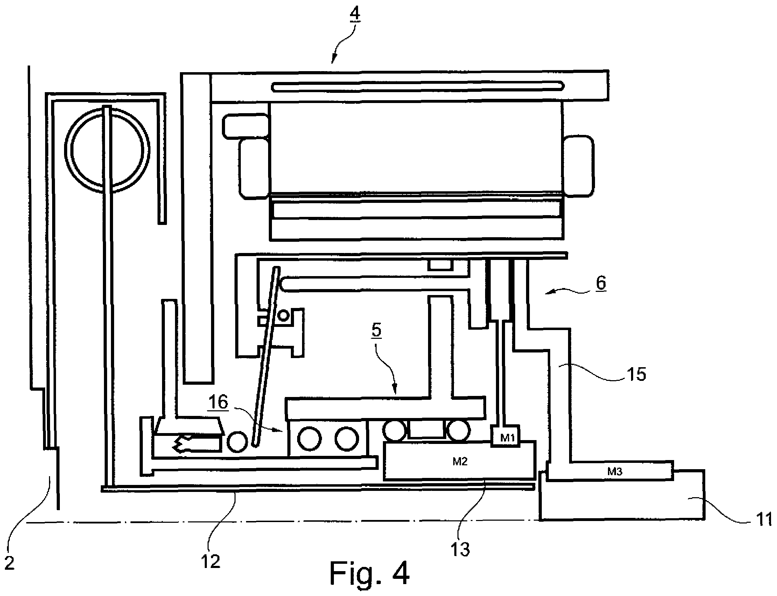

In Figur 4 ist eine derartige Ausbildung mit einer aus Zentrallager und Freilauf bestehenden Baueinheit schematisch dargestellt, wobei die abzudichtenden Stellen über die in Figur 4 aufgenommenen Pfeile dargestellt ist. Im Vergleich zu den Ausführungsbeispielen nach Figuren 2 und 3 kann also eine Dichtung entfallen. Es sind nur noch 3 Dichtungen notwendig. Zudem kann die Ausgestaltung des Zentralbauteils 14 beim Ausführungsbeispiel nach Figur 4 im Vergleich zu den Ausführungsbeispielen nach Figur 2 und 3 vereinfacht werden.

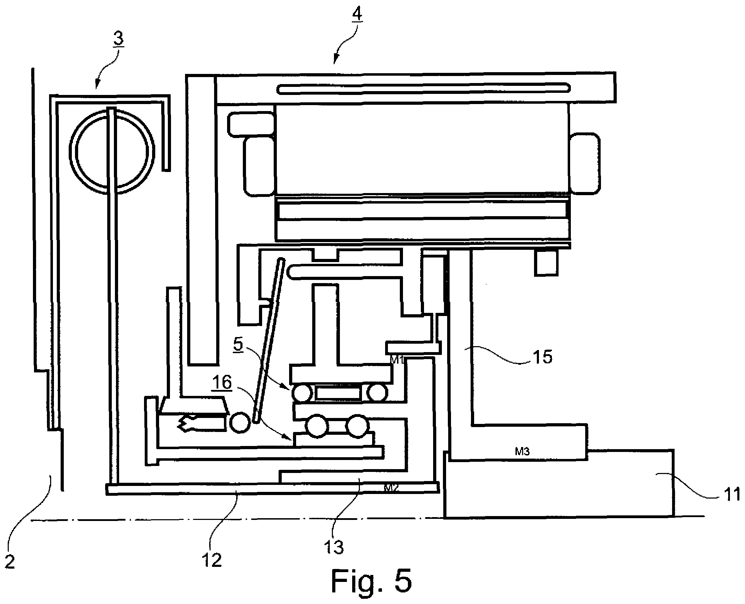

In Figur 5 ist ein weiteres Ausführungsbeispiel des Hybridmoduls 4 dargestellt, bei dem das Zentrallager 16 und der Freilauf 5 radial geschachtelt angeordnet sind. Hierüber hinaus ist das Zentralbauteil 13 derart ausgebildet, dass es zugleich ein Außenring des Zentrallagers 16 und ein Innenring des Freilaufes 5 bildet, wiederum um eine Baueinheit aus Zentrallager und Freilauf zu bilden. Wiederum kann eine der in Figur 2 und 3 noch notwendigen Dichtungen entfallen.

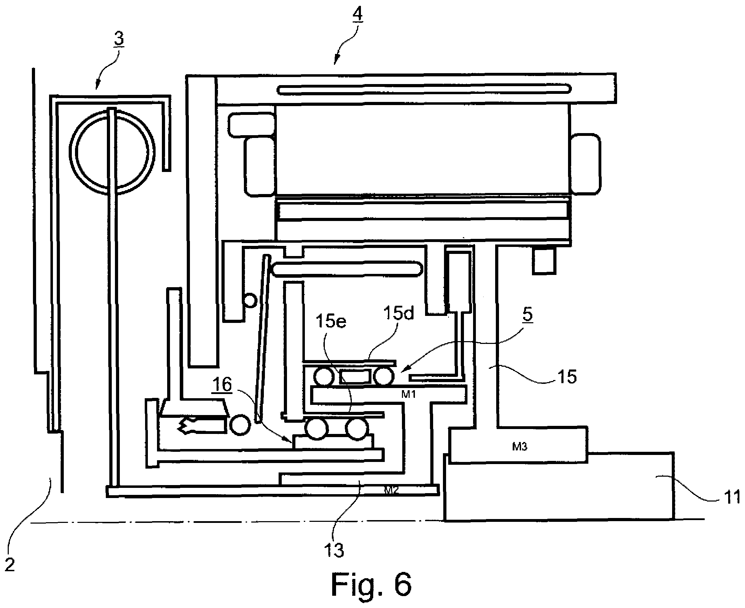

In Figur 6 ist eine weitere Möglichkeit der radialen Schachtelung von Freilauf 5 und Zentrallager gezeigt, wobei vorliegend ein Innenring des Freilaufes 5 integral mit dem Zentralbauteil 13 ausgebildet ist, und wobei das Kupplungsgehäuse 15 einen hülsenartigen Abschnitt 15d umfasst, an dem ein Außenring des Freilaufes 5 angeordnet bzw. ausgebildet ist. Ein Lageraußenring des Zentrallagers 16 kann demgegenüber an einem weiteren hülsenartigen Abschnitt 15e des Kupplungsgehäuses 15 angeordnet bzw. ausgebildet sein.

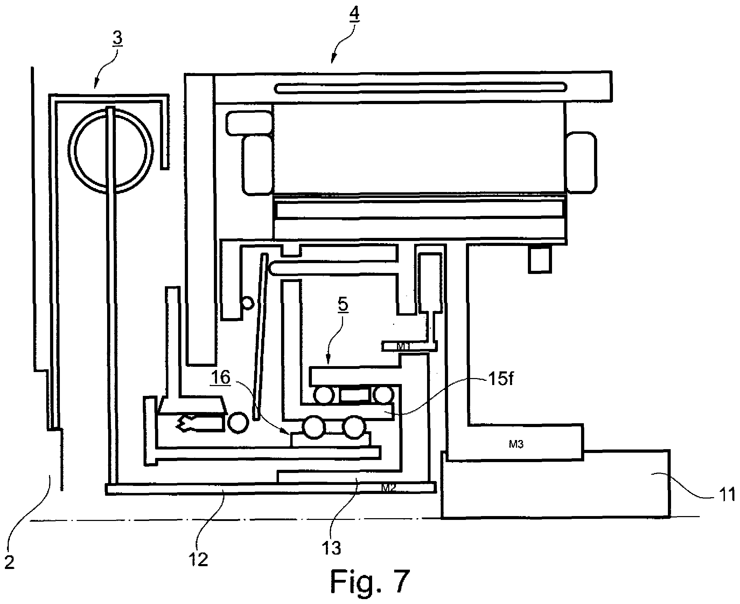

In Figur 7 ist ein weiteres Ausführungsbeispiel des Hybridmoduls gezeigt, wobei Freilauf 5 und Zentrallager 16 wiederum geschachtelt angeordnet sind, und wobei das Kupplungsgehäuse 15 einen hülsenartigen Abschnitt 15f aufweist, an welchem ein Lageraußenring des Lagers 16 und ein Innenring des Freilaufes 5 angeordnet bzw. ausgebildet sind. In Figur 7 sind wiederum die abzudichtenden Stellen über die Pfeile angedeutet.

Gerade den Ausführungsbeispielen gemäß den Figuren 5 bis 7 ist also entnehmbar, Zentrallager und Freilauf radial zu schachteln, wobei eine weitere Zusammenfassung dieser Baugruppen dadurch erfolgen kann, dass Lageraußenring und Freilaufinnenring oder umgekehrt zu einem Bauteil zusammenfasst werden, wobei entsprechend nur 3 Dichtungen notwendig sind, gegenüber 4 Dichtungen bei separater Ausbildung.

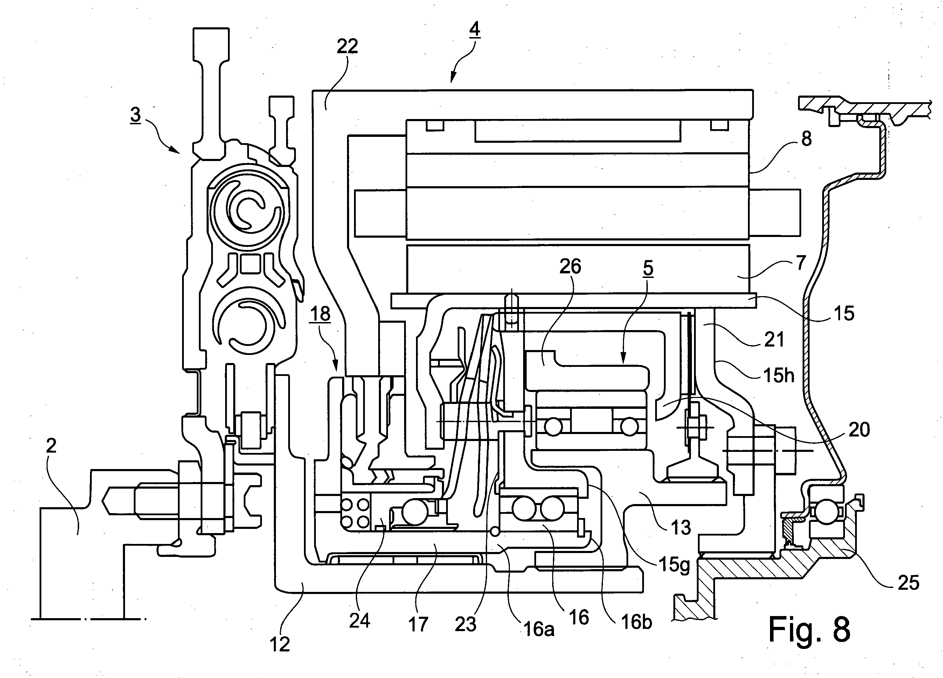

In Figur 8 ist ein weiteres Ausführungsbeispiel des Hybridmoduls 4 gezeigt, wobei das von der Kurbelwelle 2 kommende Drehmoment über das ZMS 3 (vorliegend mit einem innenliegenden Fliehkraftpendel ausgebildet) an die Zwischenwelle 12(welche am Sekundärflansch des ZMS befestigt ist bzw. mit diesem integral ausgebildet ist) übermittelt wird. Die Zwischenwelle 12 ist über eine Radiallagerung an einem Gehäusebauteil 17 bzw. an einem Flanschbauteil 17 drehbar abgestützt. Am Flanschbauteil 17 ist auch das Zentrallager 16 angeordnet, welches als Festlager zwischen Flanschbauteil 17 und Kupplungsgehäuse 15 ausgebildet ist. Entsprechend ist ein Lagerinnenring des Zentrallagers 16 über ein Ringelement 16a und einen Sicherungsring 16b festgelegt und ein Lageraußenring des Zentrallagers 16 über einen Flanschabschnitt 15g des Kupplungsgehäuses 15 in Verbindung mit einer Deckplatte 23 festgelegt. Das Flanschbauteil 17 ist am Getriebegehäuse 22 angebunden und kann Bestandteil des Gehäuses der Betätigungseinrichtung 18 sein. Die Betätigungseinrichtung 18 ist vorliegend als hydraulische Betätigungseinheit mit einem zentralen koaxial zur Zwischenwelle 12 angeordneten Zylinder und einem vorliegend halb-angebundenen Betätigungskolben ausgebildet. Halb angebunden bedeutet in diesem Fall, dass ein axiales Spiel zwischen Betätigungskolben und Betätigungslager 24 vorgesehen ist, um Stöße bei der Betätigung der Kupplung zu vermeiden.

Die Darstellung nach Figur 8 enthält zudem die beiden Extrempositionen der einen Hebelfeder 19, also einer hinteren Lage des Betätigungslagers 24 und einer vorderen Lage des Betätigungslagers 24.

Das Kupplungsgehäuse trägt wiederum den Rotor 7 der elektrischen Antriebseinheit bzw. ist mit diesem jedenfalls drehverbunden. Das Kupplungsgehäuse 15 ist zudem über einen radialen Abschnitt 15h mit einer weiteren Zwischenwelle 25 verbunden, wobei am Abschnitt 15h auch eine Anlagefläche für die Kupplungsscheibe 21 vorgesehen ist, welche zwischen diesem Abschnitt 15h und der Anpressplatte 20 einklemmbar ist.

Die Nabe der Kupplungsscheibe 21 ist dabei über eine axiale Steckverzahnung mit dem Zentralbauteil 13 verbunden.

Das Zentralbauteil 13 ist zudem mit einem Innenring des Freilaufes 5 verbunden, wobei ein Außenring des Freilaufes 5 über ein Zwischenbauteil 26 am Kupplungsgehäuse 15 angebunden ist.

Zwischen Kupplungsgehäuse 15 und Zwischenwelle 25 ist wiederum eine axiale Steckverzahnung vorgesehen. Die Zwischenwelle 25 kann über eine weitere Kupplungseinheit bzw. direkt mit dem Getriebe verbunden sein.

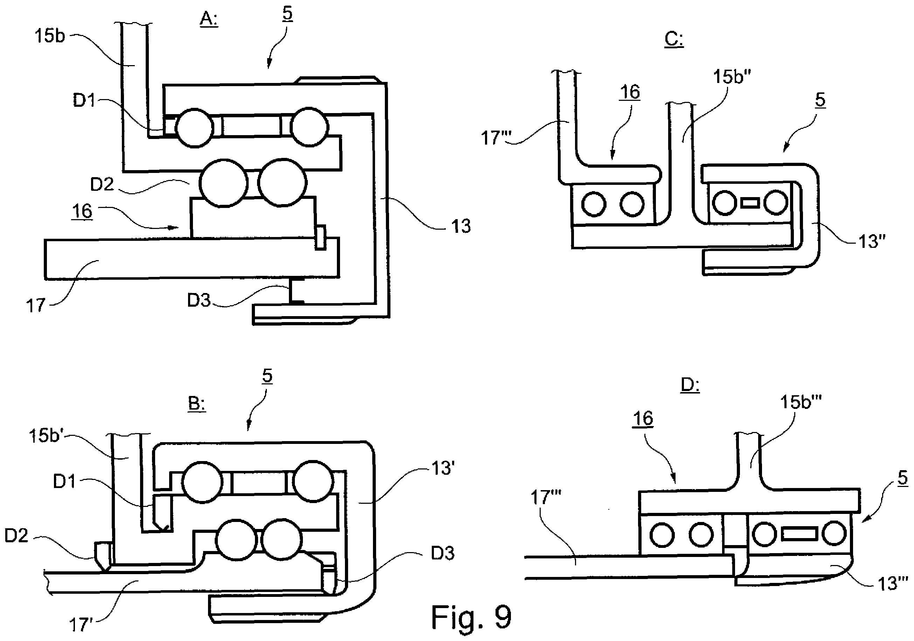

In Figur 9 sind verschiedene Varianten einer Kombination von Freilauf und Zentrallager gezeigt, wobei als Beispiel A eine radiale Schachtelung gemäß Figur 5 abgebildet ist und wobei die zur Abdichtung verwendeten Dichtungen D1, D2 und D3 abgebildet sind.

Im Bereich B der Figur 9 ist eine weitere Möglichkeit der radialen Schachtelung gezeigt, wobei ein Lagerinnenring des Zentrallager integral mit einem Flanschbauteil 17' ausbildet ist, und wobei das Zentralbauteil 13' mit einem Absatz ausbildet ist, um eine Spaltdichtung zum Kupplungsgehäuseabschnitt 15B' zu erzeugen. Wiederum sind die Dichtungen D1, D2 und D3 nunmehr in leicht veränderten Anordnungen gezeigt.

In den Bereichen C und D der Figur 9 sind zwei Möglichkeiten einer axialen Baugruppenbildung von Zentrallager 16 und Freilauf 5 abgebildet.

## Patentansprüche

1. Hybridmodul (4) für einen Triebstrang eines Fahrzeuges mit Verbrennungsmotor (1) und Getriebe (9), wobei das Hybridmodul (4) zwischen Verbrennungsmotor (1) und Getriebe (9) wirksam ist und aufweist:
einen elektrischen Antrieb (7, 8), eine Trennkupplung (6), einen Freilauf (5) und eine hydraulische oder pneumatische oder elektromechanische oder elektrische Betätigungseinheit (18) zur Betätigung der Trennkupplung (6), wobei
die Trennkupplung (6) und der Freilauf (5) parallel zueinander jeweils zur Drehmomentübertragung von Verbrennungsmotor (1) in Richtung Getriebe (9) vorgesehen sind,
der Freilauf (5) vom Verbrennungsmotor (1) kommendes Drehmoment in Richtung Getriebe (9) überträgt und bei entgegengesetzt gerichtetem Drehmoment öffnet, und
ein vom Freilauf (5) übertragener Anteil am vom Verbrennungsmotor (1) erzeugten Drehmoment durch Einstellung eines von der Trennkupplung (6) übertragbaren Drehmomentes einstellbar ist, so dass das Fahrzeug wahlweise durch den Verbrennungsmotor (1) oder den elektrischen Antrieb (7, 8) oder kombiniert gleichzeitig durch beide antreibbar ist
**dadurch gekennzeichnet, dass**
ein Kupplungsgehäuse (15) der Trennkupplung (6) über ein Zentrallager (16) axial und radial an einem Getriebegehäuse (22) gelagert ist, und
das Zentrallager (16) auf einem Gehäuse (17) der Betätigungseinheit (18) angeordnet ist.

2. Hybridmodul (4) nach Anspruch 1, wobei das Kupplungsgehäuse (15) mit einer Getriebeeingangswelle (11) über eine erste drehfeste Verbindung (M3), insbesondere eine erste axiale Steckverzahnung, verbunden ist und an welches ein Rotor (7) des elektrischen Antriebes (7, 8) Drehmoment überträgt, wobei der Freilauf (5) im Drehmomentfluß zwischen einer Kurbelwelle (2) und dem Kupplungsgehäuse (15) angeordnet ist.

3. Hybridmodul (4) nach Anspruch 2, mit einem Zentralbauteil (13), welches mit der Kurbelwelle (2) und mit einer Kupplungsscheibe (21) der Trennkupplung (6) drehfest verbunden ist, und wobei der Freilauf (5) zwischen Zentralbauteil (13) und Kupplungsgehäuse (15) angeordnet ist.

4. Hybridmodul nach Anspruch 3, wobei das Zentralbauteil (13) über eine zweite drehfeste Verbindung (M2), insbesondere eine zweite axiale Steckverzahnung, mit der Kurbelwelle (2) oder einem mit dieser verbundenen Bauteil verbunden ist, und über eine dritte drehfeste Verbindung (M1), insbesondere eine dritte axiale Steckverzahnung, mit einer Nabe der Kupplungsscheibe (21) der Trennkupplung (6) verbunden ist.

5. Hybridmodul (4) nach einem der Ansprüche 1 bis 4, wobei die Trennkupplung (6) radial innerhalb des Rotors (7) des elektrischen Antriebes (7, 8) und axial zumindest teilweise überlappend mit dem Rotor (7) des elektrischen Antriebes (7, 8) angeordnet ist.

6. Hybridmodul (4) nach Anspruch 5, wobei der Rotor (7) mit dem Kupplungsgehäuse (15) der Trennkupplung (6) drehfest verbunden ist oder integral mit dem Kupplungsgehäuse (15) der Trennkupplung (6) ausgebildet ist.

7. Hybridmodul (4) nach einem der Ansprüche 1 bis 6, mit einem Schwungmassendämpfer (3), insbesondere einem Zweimassenschwungrad, das in einem Triebstrang zwischen Verbrennungsmotor (1) und Hybridmodul (4) angeordnet ist.

8. Hybridmodul (4) nach Anspruch 7, wobei eine Ausgangsseite des Schwungmassendämpfers (3) mit einer Zwischenwelle (12) drehfest verbunden, insbesondere verschraubt oder vernietet, ist, und wobei die Zwischenwelle (12) sich durch die Betätigungseinheit (18) hindurch erstreckt und über eine Radiallagerung in dem Gehäuse (17) der Betätigungseinheit (18) gelagert ist.

9. Hybridmodul (4) nach Ansprüchen 8 und 3, wobei die Zwischenwelle (12) mit dem Zentralbauteil (13) über die zweite drehfeste Verbindung (M2) verbunden ist.

10. Hybridmodul (4) nach einem der Ansprüche 1 bis 9, wobei die Trennkupplung (6) vorgesehen ist, Drehmoment in Richtung Verbrennungsmotor (1) zu übertragen, wenn Drehmoment von dem Triebstrang in Richtung Verbrennungsmotor (1) zu übertragen ist.

11. Hybridmodul (4) nach einem der Ansprüche 1 bis 10, wobei das Zentrallager (16) und der Freilauf (5) axial und/oder radial zu einer Baueinheit zusammengefasst sind.

12. Hybridmodul (4) nach einem der Ansprüche 1 bis 11, wobei das Zentrallager (16) und der Freilauf (5) radial geschachtelt oder axial benachbart angeordnet sind.

13. Hybridmodul (4) nach Anspruch 11 oder 12, wobei Zentrallager (16) und Freilauf (5) in der Art radial zu einer Baueinheit zusammengefasst sind, dass eine Lauffläche des Zentrallagers (16) und eine Lauffläche des Freilaufs (5) zu einem Bauteil zusammengefasst sind.

14. Hybridmodul (4) nach einem der Ansprüche 1 bis 13, wobei ein Innenring (14) des Freilaufs (5) gleichzeitig die Anbindung zur Kupplungsscheibe (21) sowie zur Kurbelwelle (2) übernimmt und ein Außenring des Freilaufs (5) mit einem Getriebeeingang verbunden ist, oder wobei ein Innenring (14) des Freilaufs (5) mit dem Getriebeeingang verbunden ist und ein Außenring des Freilaufs (5) gleichzeitig die Anbindung zur Kupplungsscheibe (21) sowie zur Kurbelwelle (2) übernimmt.

15. Hybridmodul (4) nach einem der Ansprüche 1 bis 14, wobei die Trennkupplung (6) im Grundzustand geschlossen ausgebildet ist.

## Claims

1. Hybrid module (4) for a drive train of a vehicle having an internal combustion engine (1) and a transmission (9), the hybrid module (4) being active between the internal combustion engine (1) and the transmission (9) and comprising:
an electric drive (7, 8), a separating clutch (6), a freewheel (5) and a hydraulic or pneumatic or electromagnetic or electric actuating unit (18) for actuating the separating clutch (6),
the separating clutch (6) and the freewheel (5) being provided parallel to one another in each case for the transmission of torque from the internal combustion engine (1) in the direction of the transmission (9),
the freewheel (5) transmitting torque which comes from the internal combustion engine (1) in the direction of the transmission (9), and opening in the case of a torque which is directed in the opposite direction, and it being possible for a proportion, transmitted by the freewheel (5), of the torque which is generated by the internal combustion engine (1) to be set by way of setting of a torque which can be transmitted by the separating clutch (6), with the result that the vehicle can be driven selectively by the internal combustion engine (1) or the electric drive (7, 8) or in a combined manner by both at the same time,
**characterized in that**
a clutch housing (15) of the separating clutch (6) is mounted via a central bearing (16) axially and radially on a transmission housing (22), and
the central bearing (16) is arranged on a housing (17) of the actuating unit (18).

2. Hybrid module (4) according to Claim 1, the clutch housing (15) being connected to a transmission input shaft (11) via a first torque-proof connection (M3), in particular a first axial spline system, and to which clutch housing (15) a rotor (7) of the electric drive (7, 8) transmits torque, the freewheel (5) being arranged in the torque flow between a crankshaft (2) and the clutch housing (15).

3. Hybrid module (4) according to Claim 2, having a central component (13) which is connected fixedly to the crankshaft (2) and to a clutch plate (21) of the separating clutch (6) so as to rotate with them, and the freewheel (5) being arranged between the central component (13) and the clutch housing (15).

4. Hybrid module according to Claim 3, the central component (13) being connected via a second torque-proof connection (M2), in particular a second axial spline system, to the crankshaft (2) or a component which is connected to the latter, and being connected via a third torque-proof connection (M1), in particular a third axial spline system, to a hub of the clutch plate (21) of the separating clutch (6).

5. Hybrid module (4) according to one of Claims 1 to 4, the separating clutch (6) being arranged radially within the rotor (7) of the electric drive (7, 8) and so as to overlap axially at least partially with the rotor (7) of the electric drive (7, 8).

6. Hybrid module (4) according to Claim 5, the rotor (7) being connected fixedly to the clutch housing (15) of the separating clutch (6) so as to rotate with it, or being configured integrally with the clutch housing (15) of the separating clutch (6).

7. Hybrid module (4) according to one of Claims 1 to 6, having a flywheel mass damper (3), in particular a dual-mass flywheel, which is arranged in a drive train between the internal combustion engine (1) and the hybrid module (4).

8. Hybrid module (4) according to Claim 7, an output side of the flywheel mass damper (3) being connected, in particular screwed or riveted, fixedly to an intermediate shaft (12) so as to rotate with it, and the intermediate shaft (12) extending through the actuating unit (18) and being mounted via a radial bearing in the housing (17) of the actuating unit (18).

9. Hybrid module (4) according to Claims 8 and 3, the intermediate shaft (12) being connected to the central component (13) via the second torque-proof connection (M2).

10. Hybrid module (4) according to one of Claims 1 to 9, the separating clutch (6) being provided to transmit torque in the direction of the internal combustion engine (1) when torque is to be transmitted from the drive train in the direction of the internal combustion engine (1).

11. Hybrid module (4) according to one of Claims 1 to 10, the central bearing (16) and the freewheel (5) being combined axially and/or radially to form one structural unit.

12. Hybrid module (4) according to one of Claims 1 to 11, the central bearing (16) and the freewheel (5) being arranged in a radially nested or axially adjacent manner.

13. Hybrid module (4) according to Claim 11 or 12, the central bearing (16) and the freewheel (5) being combined radially to form one structural unit in such a way that a running face of the central bearing (16) and a running face of the freewheel (5) are combined to form one component.

14. Hybrid module (4) according to one of Claims 1 to 13, an inner ring (14) of the freewheel (5) at the same time taking on the attachment to the clutch plate (21) and to the crankshaft (2) and an outer ring of the freewheel (5) being connected to a transmission input, or an inner ring (14) of the freewheel (5) being connected to the transmission input and an outer ring of the freewheel (5) at the same time taking on the attachment to the clutch plate (21) and to the crankshaft (2).

15. Hybrid module (4) according to one of Claims 1 to 14, the separating clutch (6) being of closed configuration in the default state.

## Revendications

1. Module hybride (4) pour un groupe motopropulseur d'un véhicule avec un moteur à combustion interne (1) et une boîte de vitesses (9), dans lequel le module hybride (4) est actif entre le moteur à combustion interne (1) et la boîte de vitesses (3) et présente:
un entraînement électrique (7, 8), un embrayage de séparation (6), une roue libre (5) et une unité d'actionnement hydraulique ou pneumatique ou électromécanique ou électrique (18) pour actionner l'embrayage de séparation (6), dans lequel
l'embrayage de séparation (6) et la roue libre (5) sont prévus parallèlement l'un à l'autre respectivement pour la transmission du couple du moteur à combustion interne (1) en direction de la boîte de vitesses (9),
la roue libre (5) transmet un couple provenant du moteur à combustion interne (1) en direction de la boîte de vitesses (9) et s'ouvre lorsque le couple est orienté en sens inverse, et
une fraction du couple produit par le moteur à combustion interne (1) transmise par la roue libre (5) peut être réglée par le réglage d'un couple transmissible par l'embrayage de séparation (6), de telle manière que le véhicule puisse être entraîné au choix par le moteur à combustion interne (1) ou par l'entraînement électrique (7, 8) ou de façon combinée simultanément par les deux,
**caractérisé en ce que**
un carter d'embrayage (15) de l'embrayage de séparation (6) est supporté axialement et radialement par un palier central (16) sur un carter de boîte de vitesses (22), et
le palier central (16) est disposé sur un boîtier (17) de l'unité d'actionnement (18).

2. Module hybride (4) selon la revendication 1, dans lequel le carter d'embrayage (15) est relié à un arbre d'entrée de boîte de vitesses (11) par une première liaison calée en rotation (M3), en particulier une première denture d'engagement axiale, et auquel un rotor (7) de l'entraînement électrique (7, 8) transmet un couple, dans lequel la roue libre (5) est disposée dans le flux de couple entre un vilebrequin (2) et le carter d'embrayage (15).

3. Module hybride (4) selon la revendication 2 avec un composant central (13), qui est relié de façon calée en rotation au vilebrequin (2) et à un disque d'embrayage (21) de l'embrayage de séparation (6), et dans lequel la roue libre (5) est disposée entre le composant central (13) et le carter d'embrayage (15).

4. Module hybride selon la revendication 3, dans lequel le composant central (13) est relié par une deuxième liaison calée en rotation (M2), en particulier une deuxième denture d'engagement axiale, au vilebrequin (2) ou à une pièce reliée à celui-ci, et est relié par une troisième liaison calée en rotation (M1), en particulier une troisième denture d'engagement axiale, à un moyeu du disque d'embrayage (21) de l'embrayage de séparation (6).

5. Module hybride (4) selon l'une quelconque des revendications 1 à 4, dans lequel l'embrayage de séparation (6) est disposé radialement à l'intérieur du rotor (7) de l'entraînement électrique (7, 8) et axialement au moins en partie en recouvrement avec le rotor (7) de l'entraînement électrique (7, 8).

6. Module hybride (4) selon la revendication 5, dans lequel le rotor (7) est relié de façon calée en rotation au carter d'embrayage (15) de l'embrayage de séparation (6) ou est réalisé intégralement avec le carter d'embrayage (15) de l'embrayage de séparation (6) .

7. Module hybride (4) selon l'une quelconque des revendications 1 à 6, avec un amortisseur à masse d'inertie (3), en particulier un volant d'inertie à deux masses, qui est disposé dans un groupe motopropulseur entre un moteur à combustion interne (1) et un module hybride (4).

8. Module hybride (4) selon la revendication 7, dans lequel un côté de sortie de l'amortisseur à masse d'inertie (3) est relié de façon calée en rotation, en particulier vissé ou rivé, à un arbre intermédiaire (12), et dans lequel l'arbre intermédiaire (12) s'étend à travers l'unité d'actionnement (18) et est supporté par un appui radial dans le boîtier (17) de l'unité d'actionnement (18).

9. Module hybride (4) selon les revendications 8 et 3, dans lequel l'arbre intermédiaire (12) est relié au composant central (13) par la deuxième liaison calée en rotation (M2).

10. Module hybride (4) selon l'une quelconque des revendications 1 à 9, dans lequel l'embrayage de séparation (6) est prévu pour transmettre un couple en direction du moteur à combustion interne (1), lorsqu'un couple doit être transmis du groupe motopropulseur en direction du moteur à combustion interne (1).

11. Module hybride (4) selon l'une quelconque des revendications 1 à 10, dans lequel le palier central (16) et la roue libre (5) sont rassemblés axialement et/ou radialement en une unité de construction.

12. Module hybride (4) selon l'une quelconque des revendications 1 à 11, dans lequel le palier central (16) et la roue libre (5) sont emboîtés radialement ou sont disposés axialement l'un près de l'autre.

13. Module hybride (4) selon la revendication 11 ou 12, dans lequel le palier central (16) et la roue libre (5) sont rassemblés radialement en une unité de construction, de telle manière qu'une face de roulement du palier central (16) et une face de roulement de la roue libre (5) soient rassemblées en un composant.

14. Module hybride (4) selon l'une quelconque des revendications 1 à 13, dans lequel une bague intérieure (14) de la roue libre (5) assure simultanément la liaison avec le disque d'embrayage (21) ainsi qu'avec le vilebrequin (2) et une bague extérieure de la roue libre (5) est reliée à une entrée de la boîte de vitesses, ou dans lequel une bague intérieure (14) de la roue libre (5) est reliée à l'entrée de la boîte de vitesses et une bague extérieure de la roue libre (5) assure simultanément la liaison avec le disque d'embrayage (21) ainsi qu'avec le vilebrequin (2).

15. Module hybride (4) selon l'une quelconque des revendications 1 à 14, dans lequel l'embrayage de séparation (6) est fermé dans son état de base.
